# EUROPEAN PATENT SPECIFICATION

(11) **EP 1 315 365 B1**
(45) Date of publication and mention of the grant of the patent: **10.05.2006**
(21) Application number: 02026449.5
(22) Date of filing: 27.11.2002
(51) Int. Cl.: H04N 1/50, G03G 15/01

(54) **Image forming apparatus**
Bilderzeugungsgerät
Appareil de formation d'image

(30) Priority: 27.11.2001 JP 2001360947; 27.11.2001 JP 2001360948
(43) Date of publication of application: 28.05.2003
(73) Proprietor: SEIKO EPSON CORPORATION, Tokyo 160-0811 (JP)
(72) Inventor: Aruga, Tomoe, Suwa-shi, Nagano-ken 392-8502 (JP); Abe, Nobumasa, Suwa-shi, Nagano-ken 392-8502 (JP); Nomura, Yujiro, Suwa-shi, Nagano-ken 392-8502 (JP)
(74) Representative: HOFFMANN EITLE

(56) References cited:
- EP-A- 0 802 459
- EP-A- 1 331 524
- US-A- 5 508 789
- US-A1- 2001 019 353
- PATENT ABSTRACTS OF JAPAN vol. 1997, no. 03, 31 March 1997 (1997-03-31) & JP 8 305115 A (SEIKO EPSON CORP), 22 November 1996 (1996-11-22)

## Description

### BACKGROUND OF THE INVENTION

The present invention relates to a tandem-type image forming apparatus in which image forming stations for respective colors are arranged along a transfer belt, each image forming station being composed of an image carrier, a charging means and a developing means which are arranged around the image carrier. The image forming apparatus forms a multi-color image by passing the transfer belt through every station.

Tandem-type image forming apparatuses as described above are categorized into two types as:
an apparatus employing a paper delivery method which comprises a plurality of image forming stations arranged in an array, in which a receiving medium is electrostatically attracted to a delivery belt and is fed to be brought in contact with the respective stations in order and electrostatic transferring force is applied between each station and the receiving medium, thereby superposing toner images of plural colors while directly transferring the toner images to the receiving medium; and
an apparatus employing an intermediate transfer method which comprises a plurality of image forming stations arranged in an array, in which an intermediate transfer belt made of a dielectric substance is fed to be brought in contact with the respective stations and electrostatic transferring force is applied between each station and the intermediate transfer belt so as to transfer primarily toner images of the respective stations one by one to superpose the toner images on the intermediate transfer belt and the superposed toner images are transferred secondarily from the intermediate transfer belt to a receiving medium at once.

In the aforementioned paper delivery method, it is required to provide a means (roller or brush) for attracting the receiving medium to the delivery belt and high voltage power supply. In the intermediate transfer method, however, such a means and high voltage power supply are not required. Further, in the paper delivery method, it is required to strictly control the transfer bias to be applied to respective image transfer portions according to the size, the thickness, and the kind of the receiving medium. In the intermediate transfer method, the primary transfer of toner images is conducted to the intermediate transfer belt of which resistance, thickness, and surface roughness are constant regardless of the aforementioned factors of the receiving medium. The control of the transfer condition including the transfer voltage or transfer current and contact pressure must be conducted only for the secondary transfer of the toner images to the receiving medium. Therefore, the intermediate transfer method has a lot of advantages.

On the other hand, the apparatus can also be categorized according to the arrangement of the respective image forming stations. There are a method of arranging the stations horizontally and a method of arranging the stations vertically. The former has a disadvantage of requiring a larger area for placing, while the latter has a disadvantage of making the apparatus too tall to be put on a desk.

Therefore, a method of arranging the respective image forming stations obliquely is conventionally known as disclosed in Japanese Patent Unexamined Publication No. H11-95520 and Japanese Patent Unexamined Publication No. H8-305115. The former has exposure devices corresponding to the image forming stations, respectively, and the latter has an exposure device common to the respective image forming stations.

However, this method has a disadvantage as follows. Since the image forming stations are arranged above a belt, which may be either the receiving medium delivery belt or the intermediate transfer belt, obliquely disposed, toner may spill from developing means of each image forming station so as to stain image forming means such as the belt, thereby deteriorating the image quality. In addition, an exposure means must be located at an upper portion of the apparatus, thereby increasing the vibration of the apparatus and thus also deteriorating the image quality.

The apparatus of a type having an exposure device common to the respective image forming stations has an advantage of reducing the size of the exposure device because the exposure device can emit scanning lines radially. However, the device has a problem that when the relative positions between the exposure device and the image forming stations are varied because a frame fixing the exposure device and a plurality of image carriers expands due to fluctuation in temperature, the pitch of the scanning line is varied corresponding to the relative angle between scanning lines because laser beams are not parallel. The variation in pitch of a scanning line shifts the scanning position on the image carrier. That is, the image positions are different from color to color, leading to occurrence of color registration error and thus significantly deteriorating the image quality. Therefore, in case of laser beams of non-parallel type, it is important to minimize the fluctuation in temperature within the apparatus in order to prevent the relative positions between the exposure device and the image forming stations from changing.

Particularly, the number of revolutions of a polygon mirror recently increases to a region over the tens of thousands rpm with the improvement in printing speed and improvement in resolution of image forming apparatus. This increases load applied to a bearing of the polygon mirror. In this case, when the polygon mirror is arranged obliquely just like the conventional apparatus, a radial force is applied to the bearing only in the gravitational direction so that friction increases only at a portion to which the force is applied, thereby rising the temperature around the driving motor and the bearing. This rising in temperature must result in fluctuation in temperature within the apparatus, leading to occurrence of color registration error and thus deteriorating the image quality.

US 2001/0019353 A1 relates to a multi-beam exposer unit to be used in an image forming device. The image forming devices comprises image forming units which are arranged horizontally above a transfer belt unit. The multi-beam exposer apparatus is arranged in an upper part of the image forming device and comprises a common polygon mirror arranged horizontally.

EP 0 802 459 A1 relates to a color image forming apparatus comprising a plurality of image forming units arranged above a transfer belt unit. In an upper part of the color image forming apparatus a single polygon body is arranged vertically, which is provided with a plurality of reflector surfaces respectively corresponding to the plurality of image forming units for distributing a laser beam from a single laser beam source to the plurality of image forming units.

### SUMMARY OF THE INVENTION

The object of the present invention is to solve the aforementioned problems of the prior art and to provide an image forming apparatus which can curb the rising in temperature of a bearing of a polygon mirror so as to restrict the fluctuation in temperature of the entire apparatus even when the apparatus employs a common polygon mirror so that the scanning and deflection is conducted by laser beams in non-parallel with each other, thereby achieving the formation of high-quality images.

For achieving the aforementioned object, the present invention provides an image forming apparatus comprising: a plurality of image forming means, which include image carriers and developing means for developing latent images formed on the image carriers, respectively; the image forming means are arranged along an arcuate oblique line below a transfer belt unit comprising an intermediate transfer belt such that the image carriers are positioned at the upper side and the respective image carriers are aligned along the arcuate line to be pressed against a belt face of the intermediate transfer belt, and the pressure and the nip width between the image carrier and the intermediate transfer belt is adjustable by controlling the tension to be applied to the intermediate transfer belt by a tension roller, the distance between adjacent image carriers, and the curvature of the arcuate line; and an exposure means which emits laser beams for exposure to form latent images on the respective image carriers, the image forming apparatus being characterized in that said exposure means comprises a plurality of laser beam sources to be modulated according to image data corresponding to said image carriers, a common polygon mirror which is arranged horizontally or vertically and in which laser beams from said laser beam sources are reflected at a common reflection facet of the polygon mirror and are thus deflected, and optical paths for deflecting the laser beams in non-parallel with each other toward the respective image carriers, and being characterized by further comprising: a recording means which transmits toner images developed on the image carriers to superpose and record the toner images; and a fixing means for fixing the recorded toner images, wherein the fixing means is located far enough from said exposure means.

The image forming apparatus of the present invention is characterized in that the polygon mirror is disposed such that its bearing is fitted to a hole formed in a casing of the exposure means and a portion of the bearing is exposed outside the casing, and that the optical paths are formed by a plurality of mirrors which are arranged such that laser beams are reflected at a common facet of the polygon mirror toward radially and the lengths of optical paths from the common facet to the respective image carriers are also substantially equal to each other.

The image forming apparatus of the present invention is characterized in that the laser beam sources are located at such position that the respective laser beams are radially reflected at the common facet and that the laser beams of said laser beam sources are reflected at a common position of the common facet.

The image forming apparatus of the present invention is characterized in that the image carriers are arranged along an arcuate oblique line to face upward, said exposure means is located obliquely below the image carriers, and said fixing means is located obliquely above said image carriers, that is, located on the opposite side of said exposure means relative to said image carriers or that the recording means comprises an endless intermediate transfer medium having flexibility which is driven with being pressed against the image carriers along the arcuate oblique line, a sheet handling passage for carrying a receiving medium, and a transferring means for transferring a toner image from the intermediate transfer medium to the receiving medium on the sheet handling passage, wherein said fixing means is located on the way of the sheet handling passage, and that the polygon mirror is located at a lower portion close to one side and said fixing means is located at an upper portion close to the other side.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

### BRIEF DESCRIPTION OF THE DRAWINGS

Fig. 1 is schematic sectional view showing the entire structure of an embodiment of an image forming apparatus according to the present invention;
Fig. 2 is schematic sectional view showing the entire structure of another embodiment of an image forming apparatus according to the present invention; and
Fig. 3 is an enlarged sectional view of an image forming section composed of a developing means and an image carrier shown in Fig. 1 or Fig. 2.

### DETAILED DESCRIPTION OF THE PREFERRED EMBODIMENTS

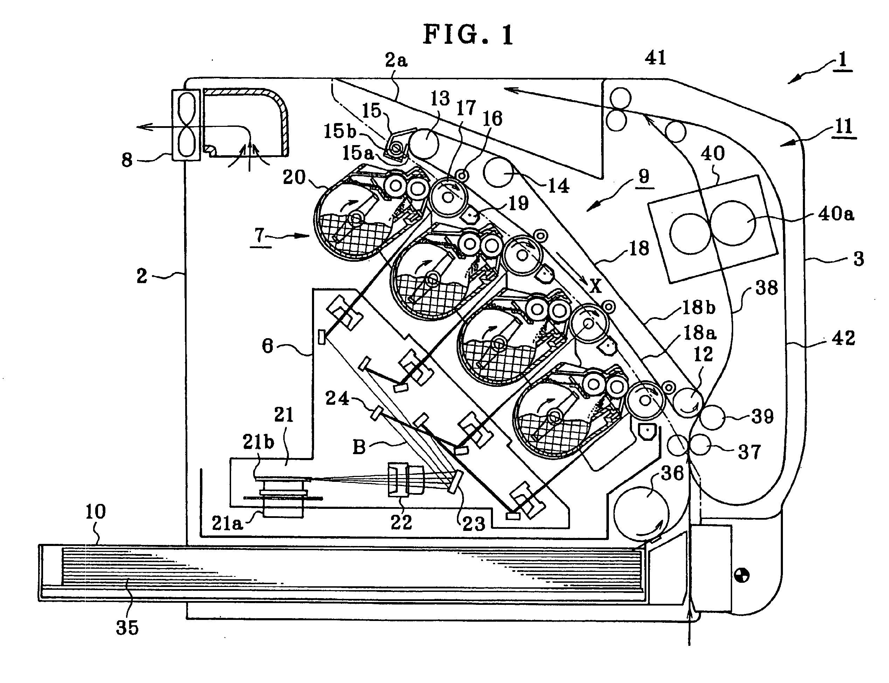

Hereinafter, embodiments of the present invention will be described with reference to the drawings. Fig. 1 is schematic sectional view showing the entire structure of an embodiment of an image forming apparatus according to the present invention. In this drawing, numeral 1 designates an image forming apparatus, 2 designates a housing, 3 designates a door body, 6 designates an exposure unit, 7 designates an image forming unit, 8 designates a cooling means, 9 designates a transfer belt unit, 10 designates a sheet supply unit, 11 designates a sheet handling unit, 15 designates a cleaning means, 17 designates image carriers, 18 designates an intermediate transfer belt, 20 designates a developing means, 21 designates a scanning means, 21b designates a polygon mirror, and 40 designates a fixing means.

In Fig. 1, the image forming apparatus 1 of this embodiment comprises the housing 2, an outfeed tray 2a which is formed in the top of the housing 2, a door body 3 which is attached to the front of the housing 2 in such a manner that the door body is able to open or close freely. Arranged within the housing 2 are the exposure unit (exposure means) 6, the image forming unit 7, the cooling means 8 composed of an air fan, the transfer belt unit 9, and the sheet supply unit 10. Arranged inside the door body 3 is a sheet handling unit 11. The respective units are designed to be detachable relative to the apparatus. In this case, each unit can be detached from the apparatus for the purpose of repair or replacement.

The image forming unit 7 comprises the image forming stations Y (for yellow), M (for magenta), C (for cyan), and K (for black) for forming multi-color images (in this embodiment, four-color images). Each image forming station Y, M, C, K has an image carrier 17 composed of a photosensitive drum, a charging means 19 composed of a corona charging means, and a developing means 20 which are arranged around the image carrier 17. The image forming stations Y, M, C, K are arranged along an arcuate oblique line below the transfer belt unit 9 such that the image carriers 17 are positioned at the upper side. It should be understood that the image forming stations Y, M, C, K may be arranged in any order.

The transfer belt unit 9 comprises a driving roller 12 which is disposed in a lower portion of the housing 2 and is driven by a driving means (not shown) to rotate, a driven roller 13 which is disposed diagonally above the driving roller 12, a backup roller (tension roller) 14, an intermediate transfer belt 18 which is laid around the three rollers with certain tension and is driven to circulate in a direction indicated by an arrow X (the counter-clockwise direction), and a cleaning means 15 which abuts on the surface of the intermediate transfer belt 18. The driven roller 13, the backup roller 14, and the intermediate transfer belt 18 are arranged obliquely to the upper left of the driving roller 12. Accordingly, during the operation of the intermediate transfer belt 18, a belt face 18a of which traveling direction X is downward takes a lower side and a belt face 18b of which traveling direction is upward takes an upper side.

Therefore, the image forming stations Y, M, C, K are arranged obliquely to the upper left of the driving roller 12. The respective image carriers 17 are aligned along an arcuate line to be pressed against the belt face 18a, of which traveling direction is downward, of the intermediate transfer belt 18. Each image carrier 17 is driven to rotate in the traveling direction of the intermediate transfer belt 18 as indicated by arrows. Since the intermediate transfer belt 18 having an endless sleeve-like shape and having flexibility is disposed over the image carriers 17 such that the intermediate transfer belt 18 is pressed against the image carriers 17 from above, the pressure and the nip width between the image carriers 17 and the intermediate transfer belt 18 can be adjusted by controlling the tension to be applied to the intermediate transfer belt 18 by the tension roller 14, the distance between adjacent image carriers 17, and the curvature of the arcuate line.

The driving roller 12 also functions as a backup roller for a secondary transfer roller 39 described later. Formed on the peripheral surface of the driving roller 12 is, for example, a rubber layer which is 3 mm in thickness and 10⁵Ω·cm or less in volume resistivity. The driving roller 12 has a metallic shaft which is grounded so as to function as a conductive path for secondary transfer bias supplied through the secondary transfer roller 39. Since the driving roller 12 is provided with the rubber layer having high friction and shock absorption, impact generated when a receiving medium is fed into a secondary transfer section is hardly transmitted to the intermediate transfer belt 18, thereby preventing the deterioration of image quality. In addition, the diameter of the driving roller 12 is set to be smaller than the diameter of the driven roller 13 and also smaller than the diameter of the backup roller 14. This facilitates the separation of a receiving medium after secondary transfer because of the elastic force of the receiving medium itself. The driven roller 13 also functions as a backup roller for the cleaning means 15 described later.

It should be noted that the intermediate transfer belt 18 may be arranged in an obliquely rightward direction relative to the driving roller 12 in the drawing. In this case, the respective image forming stations Y, M, C, K are arranged along an arcuate line extending in an obliquely rightward direction relative to the driving roller 12 in drawing. That is, these components may be arranged symmetrically with those in Fig. 1.

The cleaning means 15 is located at the belt face 18a side, of which traveling direction is downward. The cleaning means 15 comprises a cleaning blade 15a for removing toner remaining on the surface of the intermediate transfer belt 18 after the secondary transfer, and a toner carrying member 15b for carrying collected toner. The cleaning blade 15a is in contact with the intermediate transfer belt 18 at a position where the intermediate transfer belt 18 is wrapped around the driven roller 13. On the back of the intermediate transfer belt 18, primary transfer members 16 are disposed and pressed into contact with the back of the intermediate transfer belt 18 at locations corresponding to image carriers 17 of respective image forming stations Y, M, C, and K, described later. A transfer bias is applied to each primary transfer member 16.

The exposure means 6 is disposed in a space formed obliquely below the image forming unit 7 which is arranged obliquely. The cooling means 8 is disposed in a space above and adjacent to the exposure means 6. A control unit and/or a power source unit may be disposed in a space along the side of the exposure means 6 and below the cooling means 8. The sheet supply unit 10 is disposed below the exposure means 6 and at the bottom of the housing 2. The exposure means 6 has a casing 18 which is arranged in a space formed obliquely below the belt face of which traveling direction is downward. At the bottom of the casing 18, a single scanner means 21, composed of a polygon mirror motor 21a and a polygon mirror 21b, is disposed horizontally such that a bearing of the polygon mirror motor 21a is exposed outside the casing. In addition, a single f-θ lens 22 and a reflection mirror 23 are disposed in a path B. Further, a plurality of reflective mirrors 24 are disposed above the reflection mirror 23 to make scanning lines of respective colors y, m, c, k which are not parallel to each other.

By arranging the polygon mirror motor 21a and the polygon mirror 21b horizontally as shown in Fig. 1, a radial force to be applied to the bearing can be eliminated. Therefore, even when the load to be applied to the bearing increases because of the increase in number of revolutions with the improvement in printing speed and improvement in resolution of image forming apparatus, the rising in temperature around the bearing can be reduced and the fluctuation in temperature of the apparatus can be reduced. As a result, a high-quality image forming apparatus can be provided. By providing the reflective mirrors 24, the scanning lines y, m, c, k are bent, thereby lowering the height of the casing and thus making the apparatus compact. The reflective mirrors 24 are arranged in such a manner as to make the respective lengths of the scanning lines to the image carriers 17 of the image forming stations Y, M, C, K equal to each other.

Normally, the single scanner means 21 composed of the polygon mirror motor 21a and the polygon mirror 21b takes the form that the outer race of the bearing is fitted into a hole of the casing of the exposure unit such that a portion of the bearing is exposed outside the exposure unit for the positioning of itself and for the heat liberation of the bearing. This arrangement can prevent the heat of the bearing as the main source of heat of the polygon mirror 21b from being retained inside the exposure unit and thus prevents fluctuation of temperature. That is, the bearing can be effectively cooled. In this case, however, the heat from the bearing heats up air outside the exposure unit. The heated air tends to move upward. Since the scanner means 21 is arranged horizontally or obliquely as shown in Fig. 1, the heated air is interrupted to move upward and retains below the exposure unit so as to heat up the exposure unit and the entire apparatus, thereby increasing the fluctuation of temperature of the apparatus.

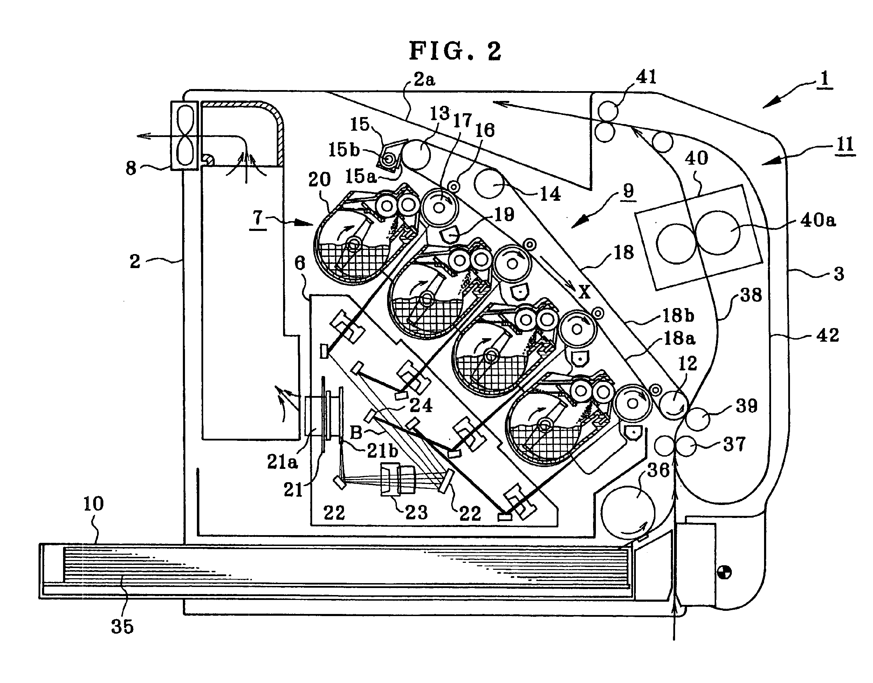

In an embodiment shown in Fig. 2, a single scanner means 21 composed of a polygon mirror motor 21a and a polygon mirror 21b is arranged vertically and a portion of the bearing is exposed outside, whereby the heated air is allowed to move upward and can be released outside through a cooling means 8. Therefore, the bearing can be effectively cooled. By using the cooling means 8 composed of an air fan as a forced exhaust means, the bearing can be more effectively cooled. The scanner means 21 is arranged vertically, thereby making the exposure unit compact and thus downsizing the image forming apparatus. In addition, a combination with the vertical arrangement in which process means including the respective image forming stations are arranged vertically or obliquely produces the following effects.

First, the vertical arrangement of the process means reduces the area of placing, while increases the height of the apparatus. In this state, the height of the apparatus is susceptible to horizontal vibration so that if there is a source of horizontal vibration, an upper portion of the apparatus may swing horizontally. On the other hand, the height of the apparatus is less susceptible to vertical vibration so that even if the process means are arranged vertically, the vibration of the apparatus is not increased with the source of vertical vibration. Therefore, assuming the polygon mirror 21b as the source of vibration, when the polygon mirror 21b is arranged vertically, the horizontal vibration of the image forming apparatus is prevented as compared to the case that the polygon mirror 21b is arranged horizontally or obliquely. Since the deterioration of image quality and the deterioration of durability of the apparatus are caused due to the vibration of the apparatus, these can be prevented.

Further, even when the load to be applied to the bearing increases because of the increase in number of revolutions with the improvement in printing speed and improvement in resolution of image forming apparatus, the rising in temperature around the bearing can be reduced and the fluctuation in temperature of the apparatus is reduced. As a result, a high-quality image forming apparatus can be provided. By providing the reflective mirrors 24, the scanning lines y, m, c, k are bent, thereby lowering the height of the casing and thus making the apparatus compact. The reflective mirrors 24 can be arranged in such a manner as to make the respective lengths of the scanning lines to the image carriers 17 of the image forming stations Y, M, C, K equal to each other.

In the exposure means 6 having the aforementioned structure, image signals corresponding to the respective colors are formed and modulated according to the common data clock frequency and are then radiated as laser beams from the polygon mirror 21b. The radiated image signals are aimed to the image carriers 17 of the image forming stations Y, M, C, K via the f-θ lens 22, the reflection mirror 23, and the reflective mirrors 24, thereby forming latent images. Since the respective lengths of the scanning lines (optical paths) from the polygon mirror 21b of the exposure means 6 to the image carriers 17 of the image forming units 7 are designed equal to each other, the scanning widths of light beams are also substantially equal to each other. Therefore, no special structure for forming the image signals is required. Though the laser beam sources must be modulated to correspond to images of different colors according to different image signals, respectively, the laser beam sources can be modulated based on a common data clock frequency. Since a common reflection facet is used, the occurrence of color registration error caused by relative shifts in the sub scanning direction can be prevented. Therefore, this achieves the production of a cheaper multi-color image forming apparatus with simple structure.

Further, since plurality of laser beams are radiated from a common position of the common facet of the common polygon mirror 21b to scan the respective image carriers 17 by deflection, the accuracy of the reflection facet and the rotational accuracy of the polygon mirror 21b are canceled so that the plurality of laser beams are uniformly deflected, thereby reducing the possibility of image forming jitter caused due to deflection scanning.

In this embodiment, the scanning optical system is arranged at a lower side of the apparatus, thereby minimizing the vibration of the scanning optical system due to vibration of the driving system of the image forming means which affects the frame supporting the apparatus and thus preventing the deterioration of image quality. In particular, by arranging the scanning means 21 at the bottom of the casing, vibration of the polygon motor 21a affecting the casing can be minimized, thereby preventing the deterioration of image quality. Since only a single polygon motor 21a is provided which is a source of vibration, vibration affecting the casing can be minimized.

The cooling means 8 composed of an air fan is provided on one side of the housing 2 to introduce air inside the apparatus in a direction of arrows in order to emit the heat from heating members such as the exposure means 6. The temperature of the polygon motor 21a is prevented from increasing, thereby preventing the deterioration of image quality and increasing the life of the polygon motor 21a.

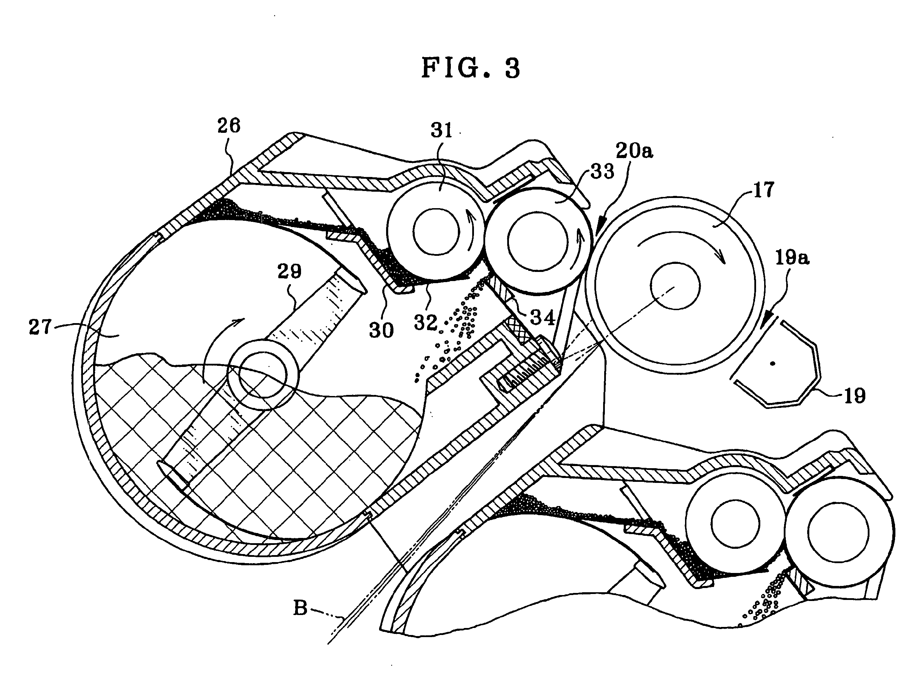

In this embodiment, the respective image forming stations Y, M, C, K are arranged obliquely and the image carriers 17 are arranged along an arcuate oblique line at the upper side. Since the image carriers 17 are in contact with the belt face 18a, of which traveling direction is downward, of the intermediate transfer belt 18, the toner containers 26 are arranged obliquely downward to the lower left of the image carriers 17. For this, special structure is employed in the developing means 20. Fig. 3 is an enlarged sectional view of an image forming section composed of a developing means and an image carrier shown in Fig. 1 or Fig. 2.

As shown in Fig. 3, the developing means 20 each comprises the toner container 26 storing toner (indicating by hatching), a toner storage area 27 formed in the toner container 26, a toner agitating member 29 disposed inside the toner storage area 27, a partition 30 defined in an upper portion of the toner storage area 27, a toner supply roller 31 disposed above the partition 30, a flexible blade 32 attached to the partition 30 to abut the toner supply roller 31, the development roller 33 arranged to abut both the toner supply roller 31 and the image carrier 17, and a regulating blade 34 arranged to abut the development roller 33.

The image carrier 17 is rotated in the traveling direction of the intermediate transfer belt 18. The development roller 33 and the supply roller 31 are rotated in a direction opposite to the rotational direction of the image carrier 17 as shown by arrows. On the other hand, the agitating member 29 is rotated in a direction opposite to the rotation of the supply roller 31. Toner agitated and scooped up by the agitating member 29 in the toner storage area 27 is supplied to the toner supply roller 31 along the upper surface of the partition 30. Friction is caused between the toner and the flexible blade 32 so that mechanical adhesive force and adhesive force by triboelectric charging are created relative to the rough surface of the supply roller 31. By these adhesive forces, the toner is supplied to the surface of the development roller 33. The toner supplied to the development roller 33 is regulated into a coating layer having a predetermined thickness by the regulating blade 34. The toner layer as a thin layer is carried to the image carrier 17 so as to develop a latent image on the image carrier 17 at and near a nip portion which is a contact portion between the development roller 33 and the image carrier 17.

In this embodiment, the development roller 33 disposed facing the image carrier 17, the toner supply roller 31, and the contact portion of the regulating blade 34 relative to the development roller 33 are not submerged in the toner of the toner storage area 27. This arrangement can prevent the contact pressure of the regulating blade 34 relative to the development roller 33 from being varied due to the decrease of the stored toner. In addition, since excess toner scraped from the development roller 33 by the regulating blade 34 spills onto the toner storage area 27, thereby preventing filming of the development roller 33.

The contact portion between the development roller 33 and the regulating blade 34 is positioned below the contact portion between the supply roller 31 and the development roller 33. There is a passage for returning excess toner, which was supplied to the development roller 33 by the supply roller 31 but not transmitted to the development roller 33, and excess toner, which was removed from the development roller 33 by the regulating operation of the regulating blade 34, to the toner storage area 27 at the lower portion of the developing means. The toner returned to the toner storage area 27 is agitated with toner in the toner storage area 27 by the agitating member 29, and is supplied to a toner inlet near the supply roller 31 again. Therefore, the excess toner is let down to the lower portion without clogging the friction portion between the supply roller 31 and the development roller 33 and the contact portion between the development roller 33 and the regulating blade 34 with the excess toner and is then agitated with toner in the toner storage area 27, whereby the toner in the developing means deteriorates slowly so that portentous changes in image quality just after the replacement of the developing means is prevented.

The developing means 20 has a development roller aperture 20a disposed adjacent to the development roller 33. The corona charging means 19 as a charging means has an upward opening 19a which opens upwardly to the image carrier 17. If the upward opening 19a of the corona charging means 19 is positioned below the development roller aperture 20a, toner spills from the development roller aperture 20a because of the gravity and thus enters into the corona charging means 19 through the upward opening 19a so as to undesirably stain the corona charging means 19.

In this embodiment, the upward opening 19a of the corona charging means 19 is offset toward the intermediate transfer belt 18 from the development roller aperture 20a of the developing means 20 such that the upward opening 19a does not overlap relative to the development roller aperture 20a. This can solve the possible problem that toner spills from the development roller aperture 20a because of the gravity and thus enters into the corona charging means 19 through the upward opening 19a so as to undesirably stain the corona charging means 19.

The sheet supply unit 10 comprises a sheet cassette 35 in which a pile of receiving media P are held, and a pick-up roller 36 for feeding the receiving media P from the sheet cassette 35 one by one. The sheet handling unit 11 comprises a pair of gate rollers 37 (one of which is positioned on the housing 2 side) for regulating the feeding of a receiving medium P to the secondary transfer portion at the right time, the secondary transfer roller 39 as a secondary transfer means abutting and pressed against the driving roller 12 and the intermediate transfer belt 18, a sheet feeding passage 38, the fixing means 40, a pair of outfeed rollers 41, and a dual-side printing passage 42.

The fixing means 40 comprises a pair of fixing rollers 40a at least one of which has a built-in heating element such as a halogen heater and which are freely rotatable, and a pressing means for pressing at least one of the rollers against the other roller to press a secondary image secondarily transferred to the receiving medium P. The secondary image secondarily transferred to the receiving medium is fixed to the receiving medium at the nip portion formed between the fixing rollers 40a at a predetermined temperature. In this embodiment, the fixing means 40 can be arranged in a space formed obliquely above the belt face 18b, of which traveling direction is upward, of the transfer belt, that is, a space formed on the opposite side of the image forming stations relative to the transfer belt. This arrangement enables the reduction in heat transfer to the exposure means 6, the intermediate transfer belt 18, and the image forming means and lessens the frequency of taking the action for correcting color registration error. In particular, the exposure means 6 is positioned farthest from the fixing means 40, thereby minimizing the deformation of the scanning optical components due to heat and thus preventing the occurrence of color registration error.

In this embodiment, since the intermediate transfer belt 18 is disposed to be inclined relative to the driving roller 12, a large space is created on the right side of the intermediate transfer belt 18 in the drawing. The fixing means 40 can be disposed in the space, thereby achieving the reduction in size of the apparatus. This arrangement also prevents the heat generated by the fixing means 40 from being transferred to the exposure unit 6, the intermediate transfer belt 18, and the respective image forming stations Y, M, C, K which are located in the left side portion of the apparatus. Since the exposure unit 6 can be located in a space on the lower left side of the image forming unit 7, the vibration of the scanning optical system of the exposure unit 6 due to vibration of the driving system of the image forming means can be minimized and the deterioration of image quality can be prevented.

Further, in this embodiment, by employing spheroidized toner, the primary transfer efficiency is increased (approximately 100%). Therefore, no cleaning means for collecting residual toner after the primary transfer is used for the respective image carriers 17. Accordingly, the image carriers 17 composed of a photosensitive drum of which diameter is 30 mm or less can be arranged closely to each other, thereby reducing the size of the apparatus.

Because no cleaning device is used, the corona charging means 19 is employed as a charging means. When the charging means is a roller, residual toner after the primary transfer on the image carrier 17 (the amount of which should be small) is deposited on the roller, leading to insufficient charging. On the other hand, since the corona charging means 19 is a non-contact charging means, toner hardly adheres to the image carriers, thereby preventing the occurrence of insufficient charging.

The actions of the image forming apparatus as a whole will be summarized as follows:
(1) As a printing command (image forming signal) is inputted into the control unit of the image forming apparatus 1 from a host computer (personal computer) (not shown) or the like, the image carriers 17 and the respective rollers of the developing means 20 of the respective image forming stations Y, M, C, K, and the intermediate transfer belt 18 are driven to rotate.
(2) The outer surfaces of the image carriers 17 are uniformly charged by the charging means 19.
(3) In the respective image forming stations Y, M, C, K, the outer surfaces of the image carriers 17 are exposed to selective light corresponding to image information for respective colors by the exposure unit 6, thereby forming electrostatic latent images for the respective colors.
(4) The electrostatic latent images formed on the image carriers 17 are developed by the developing means 20 to form toner images.
(5) The primary transfer voltage of the polarity opposite to the polarity of the toner is applied to the primary transfer members 16 of the intermediate transfer belt 18, thereby transferring the toner images formed on the image carriers 17 onto the intermediate transfer belt 18 sequentially. According to the movement of the intermediate transfer belt 18, the toner images are superposed on the intermediate transfer belt 18.
(6) In synchronization with the movement of the intermediate transfer belt 18 on which primary images are transferred, a receiving medium P accommodated in the sheet cassette 35 is fed to the secondary transfer roller 39 through the pair of resist rollers 37.
(7) The primary-transferred image meets with the receiving medium at the secondary transfer portion. A bias of the polarity opposite to the polarity of the primary transfer image is applied by the secondary transfer roller 39 which is pressed against the driving roller 12 for the intermediate transfer belt 18 by a pressing mechanism (not shown), whereby the primary-transferred image is secondarily transferred to the receiving medium fed in the synchronization manner.
(8) Residual toner after the secondary transfer is carried toward the driven roller 13 and is scraped by the cleaning means 15 disposed opposite to the roller 13 so as to refresh the intermediate transfer belt 18 to allow the above cycle to be repeated.
(9) The receiving medium passes through the fixing means 40, whereby the toner image on the receiving medium is fixed. After that, the receiving medium is carried toward a predetermined position (toward the outfeed tray 2a in case of single-side printing, or toward the dual-side printing passage 42 in case of dual-side printing).

As apparent from the above description, according to the present invention, an apparatus comprises a plurality of image carriers arranged in a line, an exposure means for emitting laser beams to expose the image carriers so as to form latent images, and a plurality of developing means for developing the latent images formed on the image carriers, wherein the exposure means comprises a plurality of laser beam sources to be modulated according to image data corresponding to the image carriers, a common polygon mirror which is arranged horizontally and reflect laser beams of the respective laser beam sources at a common reflecting facet, and optical paths for deflecting the laser beams in non-parallel with each other toward the respective image carriers. The apparatus further comprises a receiving means for superposing the toner images developed on the image carriers, and a fixing means for fixing the superposed toner images. Since the fixing means is disposed far enough from the exposure means, heat generated by the fixing means is prevented from being transmitted to the exposure means. Further, since the common polygon mirror is arranged horizontally, a bearing is prevented from being directly subjected to the weight of a rotary member, thereby improving the stability of the bearing and gravitational stability and lessening disturbances such as vibration of driving means. Therefore, the life of the bearing can be lengthened.

The common polygon mirror is arranged vertically and a portion of the bearing is exposed outside, whereby the heated air is allowed to move upward and can be released outside. Therefore, the bearing can be effectively cooled. In addition, the horizontal vibration of the image forming apparatus is reduced as compared to the case that the polygon mirror is arranged horizontally or obliquely. Since the deterioration of image quality and the deterioration of durability of the apparatus are caused due to the vibration of the apparatus, these can be prevented.

Therefore, even when the number of revolutions of the driving motor is increased, the rising in temperature around the bearing as the main element of generating heat in the polygon mirror can be reduced and the fluctuation in temperature of the apparatus due to the heat can be reduced. Since only a single polygon motor is commonly used, the heat value as a whole can be reduced, enabling the stable scanning of laser beams.

Further, since a plurality of laser beams are radiated from a common position of the common facet to scan the respective image carriers by deflection, the accuracy of the reflection facet and the rotational accuracy of the polygon mirror are canceled so that the plurality of laser beams are uniformly deflected, thereby reducing the possibility of image forming jitter caused due to deflection scanning.

The polygon mirror is disposed such that its bearing is fitted to a hole formed in the casing of the exposure means and a portion of the bearing is exposed outside the casing, a plurality of mirrors are arranged such that laser beams are reflected at a common facet of the polygon mirror to scan radially and the lengths of light beams from the common facet to the respective image carriers are also substantially equal to each other, and a plurality of laser beam sources are arranged at such position that the respective laser beams are radially reflected at the common facet. Therefore, the heat liberation to the outside can be effectively conducted and the exposure means can be structured smaller and cheaper. Though the laser beam sources must be modulated to correspond to different image signals, respectively, the laser beams can be modulated based on a common data clock frequency not to cause relative shifts in the sub scanning direction, thereby achieving stable formation of images without color registration error.

The image carriers are arranged along an arcuate oblique line to face upward, the exposure means is located obliquely below the image carriers, and the fixing means is located obliquely above the image carriers, that is, located on the opposite side of the exposure means relative to the image carriers. Therefore, the polygon mirror is positioned far enough from the image forming members such as exposure portions, transfer portions, a fixing portion, thereby preventing heat from being retained inside the exposure unit and thus preventing fluctuation in temperature of the exposure means. The bearing can be effectively cooled.

The recording means comprises an endless intermediate transfer medium having flexibility which is driven with being pressed against the image carriers along the arcuate oblique line, a sheet handling passage for carrying a receiving medium, and a transferring means for transferring a toner image from the intermediate transfer medium to the receiving medium on the sheet handling passage. The fixing means is located on the way of the sheet handling passage. While the fixing means is located obliquely to one side and above the intermediate transfer medium, the polygon mirror is located obliquely to the other side and below the intermediate transfer medium. The exposure means is located on the other side of the fixing means relative to the intermediate transfer medium, whereby heat from the polygon mirror and heat from the fixing means are effectively radiated. The affects on the exposure means due to the heat from the fixing means which emits a larger amount of heat can be reduced.

## Claims

1. An image forming apparatus comprising:
a plurality of image forming means, which include image carriers (17) and developing means (20) for developing latent images formed on the image carriers (17), respectively, wherein
the image forming means are arranged along an arcuate oblique line below a transfer belt unit (9) comprising an intermediate transfer belt (18) such that the image carriers (17) are positioned below the intermediate transfer belt and the respective image carriers (17) are aligned along the arcuate line to be pressed against a belt face (18a) of the intermediate transfer belt (18); and
the pressure and the nip width between the image carrier (17) and the intermediate transfer belt (18) is adjustable by controlling the tension to be applied to the intermediate transfer belt (18) by a tension roller (14), the distance between adjacent image carriers (17), and the curvature of the arcuate line;
an exposure means (6) which emits laser beams for exposure to form latent images on the respective image carriers (17), wherein said exposure means (6) comprises a plurality of laser beam sources to be modulated according to image data corresponding to said image carriers (17), a common polygon mirror (21b) which is arranged horizontally or vertically and in which laser beams from said laser beam sources are reflected at a common reflection facet of the polygon mirror (21b) and are thus deflected, and optical paths for deflecting the laser beams in non-parallel with each other toward the respective image carriers.

2. An image forming apparatus according to claim 1 further comprising:
a recording means which transmits toner images developed on the image carriers to superpose and record the toner images; and
a fixing means (40) for fixing the recorded toner images,
wherein the fixing means (40) is located on an opposite side of said exposure means (6) relative to said image carriers (17).

3. An image forming apparatus according to claim 1, **characterized in that** the developing means (20) each comprise a toner container (26) storing toner, a toner storage area (27) formed in the toner container (26), a toner agitating member (29) disposed inside the toner storage area (27), a partition (30) defined in an upper portion of the toner storage area (27), a toner supply roller (31) disposed above the partition (30), a flexible blade (32) attached to the partition (30) to abut the toner supply roller (31), the development roller (33) arranged to abut both the toner supply roller (31) and the image carrier (17), and a regulating blade (34) arranged to abut the development roller (33).

4. An image forming apparatus as claimed in claim 1 or 2, wherein said polygon mirror (21b) is disposed such that its bearing is fitted to a hole formed in a casing of the exposure means (6) and a portion of the bearing is exposed outside the casing.

5. An image forming apparatus as claimed in claim 1 or2, wherein said optical paths are formed by a plurality of mirrors (24) which are arranged such that the lengths of optical paths of laser beams, radiated at a common facet of the polygon mirror, from the common facet to the respective image carriers (17) are also substantially equal to each other.

6. An image forming apparatus as claimed in claim 1 or2, wherein said image carriers (17) are arranged along an arcuate oblique line to face upward, and said exposure means (6) is located obliquely below the image carriers (17).

7. An image forming apparatus as claimed in claim 1 or 2, wherein said laser beam sources are located at such position that the respective laser beams are radiated at the common facet.

8. An image forming apparatus as claimed in claim 1 or 2, wherein the laser beams of said laser beam sources are reflected at a common position of the common facet.

9. An image forming apparatus as claimed in claim 2, wherein said recording means comprises
an endless intermediate transfer medium having flexibility which is driven with being pressed against the image carriers (17) along the arcuate oblique line,
a sheet handling passage for carrying a receiving medium, and
a transferring means for transferring a toner image from the intermediate transfer medium to the receiving medium on the sheet handling passage, wherein said fixing means (40) is located on the way of the sheet handling passage.

10. An image forming apparatus as claimed in claim 2, wherein said polygon mirror (21b) is located at a lower portion close to one side and said fixing means (40) is located at an upper portion close to the other side.

## Patentansprüche

1. Bilderzeugende Vorrichtung umfassend
eine Mehrzahl bilderzeugender Mittel, umfassend Bildträger (17) und zugehörige Entwicklungsmittel (20) zur Entwicklung eines latenten Bildes auf dem Bildträger (17), wobei die bilderzeugenden Mittel entlang einer bogenförmigen schrägen Line unterhalb einer ein zwischenliegendes Überführungsband (18) umfassenden Überführungsbandeinheit (9) so angeordnet sind, dass die Bildträger (17) unterhalb des Überführungsbands liegen und die jeweiligen Bildträger (17) so entlang der bogenförmigen Linie ausgerichtet sind, dass sie gegen Bandfläche (18a) des zwischenliegenden Überführungsbands (18) gedrückt werden, und wobei der Druck und die Spaltbreite zwischen dem Bildträger (17) und dem zwischenliegenden Überführungsband (18) durch Steuerung der an das zwischenliegende Überführungsband (18) anzulegenden Spannung durch einen Spannungsrollenkörper (14), den Abstand zwischen angrenzenden Bildträgern (17) und der Krümmung der bogenförmigen Linie anpassbar sind;
ein Belichtungsmittel(6), das Laserstrahlen zur Belichtung abstrahlt, um das latente Bild an dem jeweiligen Bildträger (17) zu bilden, wobei das Belichtungsmittel(6) eine Mehrzahl an Laserstrahlquellen, welche entsprechend dem Bildträger (17) zugeordneten Bilddaten moduliert werden, einen gemeinsamen Polygonspiegel (21b), der horizontal oder vertikal angeordnet ist und an dem Laserstrahlen der Laserstrahlquellen an einer gemeinsamen Reflektionsfacette des Polygonspiegels (21b) reflektiert und somit abgelenkt werden, und optische Pfade zur Ablenkung der nicht zueinander parallelen Laserstrahlen in Richtung eines zugehörigen Bildträgers umfasst.

2. Eine bilderzeugende Vorrichtung gemäß Anspruch 1 weiter umfassend:
ein Aufzeichnungsmittel, das an dem Bildträger entwickelte Tonerbilder überträgt, um die Tonerbilder zu überlagern und aufzuzeichnen; und
ein Fixierungsmittel (40) zur Fixierung der aufgezeichneten Tonerbilder,
wobei das Fixierungsmittel (40) auf der dem Belichtungsmittel (6) gegenüberliegenden Seite bezüglich der Bildträger (17) angeordnet ist.

3. Eine bilderzeugende Vorrichtung gemäß Anspruch 1, **dadurch gekennzeichnet, dass** die Entwicklungsmittel (20) jeweils einen Toner lagernden Tonerbehälter (26), einen in dem Tonerbehälter (26) ausgebildeten Tonerlagerbereich (27), ein in dem Tonerlagerbereich (27) angeordnetes Tonermischelement (29), einen in einem oberen Teil des Tonerlagerbereichs (27) festgelegten Teilbereich (30), einen oberhalb des Teilbereichs 30 angeordneten Tonerzufuhrrollenkörper (31), eine flexible Klinge (32), welche so an dem Teilbereich (30) befestigt ist, dass sie den Tonerzufuhrrollenkörper (31) berührt, einen Entwicklungsrollenkörper (33), der so angeordnet ist, dass er sowohl den Tonerzufuhrrollenkörper (31) als auch den Bildträger (17) berührt, und eine Regulierungsklinge (34), die so angeordnet ist, dass sie den Entwicklungsrollenkörper (33) berührt, umfassen.

4. Eine bilderzeugende Vorrichtung gemäß Anspruch 1 oder 2, wobei der Polygonspiegel (21b) so angeordnet ist, dass sein Lager in eine Öffnung eingebaut ist, die in dem Gehäuse des Belichtungsmittels (6) ausgebildet ist, und dass ein Teil des Lagers an der Außenseite des Gehäuses hervorsteht.

5. Eine bilderzeugende Vorrichtung gemäß Anspruch 1 oder 2, wobei die optischen Pfade durch eine Mehrzahl an Spiegeln (24) ausgebildet sind, welche so angeordnet sind, dass die Längen der optischen Pfade des Laserstrahls, welche an einer gemeinsamen Facette des Polygonspiegels abgestrahlt werden, von der gemeinsamen Facette zu dem jeweiligen Bildträger (17) im Wesentlichen einander gleich sind.

6. Eine bilderzeugende Vorrichtung gemäß Anspruch 1 oder 2, wobei die Bildträger (17) entlang einer bogenförmigen schrägen Linie nach oben gerichtet angeordnet, und das Belichtungsmittel(6) schräg unterhalb des Bildträgers (17) angeordnet ist.

7. Eine bilderzeugende Vorrichtung gemäß Anspruch 1 oder 2, wobei die Laserstrahlquellen an Positionen angeordnet sind, so dass die zugehörigen Laserstrahlen an einer gemeinsamen Facette abgestrahlt werden.

8. Eine bilderzeugende Vorrichtung gemäß Anspruch 1 oder 2, wobei die Laserstrahlen der Laserstrahlquellen an einer gemeinsamen Stelle auf der gemeinsamen Facette reflektiert werden.

9. Eine bilderzeugende Vorrichtung gemäß Anspruch 2, wobei das Aufzeichnungsmittel umfasst:
einen endloses, zwischenliegendes Überführungsmittel mit einer Flexibilität, welches angetrieben wird, während es gegen die Bildträger (17) entlang der bogenförmigen, schrägen Linie gedrückt wird,
eine Blattbearbeitungspassage zur Beförderung eines Aufzeichnungsmediums, und
ein Übertragungsmittel zur Übertragung eines Tonerbildes von dem zwischenliegend Überführungsmittel auf das Aufzeichnungsmittel in der Blatthantierungspassage,
wobei das Fixierungsmittel (40) in der Blattbearbeitungspassage angeordnet ist.

10. Eine bilderzeugende Vorrichtung gemäß Anspruch 2, wobei der Polygonspiegel (21b) in einem unteren Bereich, nahe einer Seite und das Fixierungsmittel (40) in einem oberen Bereich, nahe der anderen Seite angeordnet ist.

## Revendications

1. Appareil de formation d'image comprenant :
une pluralité de moyens de formation d'image, qui incluent des supports d'image (17) et des moyens de développement (20) pour développer les images latentes formées sur les supports d'image (17), respectivement, dans lequel
les moyens de formation d'image sont disposés le long d'une ligne oblique arquée en dessous d'un élément avec une courroie de transfert (9) comprenant une courroie de transfert intermédiaire (18) de telle sorte que les supports d'image (17) sont positionnés en dessous de la courroie de transfert intermédiaire et les supports d'image respectifs (17) sont alignés le long de la ligne arquée pour être pressés contre une face de courroie (18a) de la courroie de transfert intermédiaire (18) ; et
la pression et la largeur de contact entre le support d'image (17) et la courroie de transfert intermédiaire (18) est ajustable en commandant la tension qui doit être appliquée à la courroie de transfert intermédiaire (18) par un galet tendeur (14), la distance entre les supports d'image adjacents (17) et la courbure de la ligne arquée ;
un moyen d'exposition (6) qui émet des rayons laser pour exposition pour former les images latentes sur les supports d'image respectifs (17), dans lequel ledit moyen d'exposition (6) comprend une pluralité de sources de rayons laser qui doivent être modulées selon les données d'image correspondant aux dits supports d'image (17), un miroir polygonal commun (21b) qui est disposé horizontalement ou verticalement et dans lequel les rayons laser provenant des sources de rayons laser sont réfléchis à une facette de réflexion commune du miroir polygonal (21b) et sont donc défléchis, et les trajets optiques pour défléchir les rayons laser d'une manière non parallèle les uns par rapports aux autres vers les supports d'image respectifs.

2. Appareil de formation d'image selon la revendication 1 comprenant en outre :
un moyen d'enregistrement qui transmet les images de toner développées sur les supports d'image pour superposer et enregistrer les images de toner ; et
un moyen de fixation (40) pour fixer les images de toner enregistrées,
dans lequel le moyen de fixation (40) est situé sur un côté opposé dudit moyen d'exposition (6) par rapport aux dits supports d'image (17).

3. Appareil de formation d'image selon la revendication 1, **caractérisé en ce que** les moyens de développement (20) comprennent chacun un récipient de toner (26) stockant le toner, une zone de stockage de toner (27) formée dans le récipient de toner (26), un organe d'agitation de toner (27), une séparation (30) définie à une partie supérieure de la zone de stockage de toner (27), un rouleau d'alimentation en toner (31) disposé au-dessus de la séparation (30), une lame flexible (32) attachée à la séparation (30) pour venir en butée contre le rouleau d'alimentation en toner (31), le rouleau de développement (33) arrangé pour venir en butée à la fois contre le rouleau d'alimentation en toner (31) et contre le support d'image (17), et une lame de régulation (34) arrangée pour venir en butée contre le rouleau de développement (33).

4. Appareil de formation d'image comme revendiqué dans la revendication 1 ou 2, dans lequel ledit miroir polygonal (21b) est disposé de telle sorte que son support est tenu dans un trou formé dans un carter du moyen d'exposition (6) et une partie du support est exposée à l'extérieur du carter.

5. Appareil de formation d'image comme revendiqué dans la revendication 1 ou 2, dans lequel lesdits trajets optiques sont formés par une pluralité de miroirs (24) qui sont disposés de telle sorte que les longueurs des trajets optiques des rayons laser, émis à une facette commune du miroir polygonal, allant de la facette commune jusqu'aux supports d'image respectifs (17), sont également sensiblement égaux les uns par rapport aux autres.

6. Appareil de formation d'image comme revendiqué dans la revendication 1 ou 2, dans lequel lesdits supports d'image (17) sont disposés le long d'une ligne oblique arquée pour être orientés vers le haut et ledit moyen d'exposition (6) est situé obliquement en dessous des supports d'image (17).

7. Appareil de formation d'image comme revendiqué dans la revendication 1 ou 2, dans lequel lesdites sources de rayons laser sont situées à des positions telles que les rayons laser respectifs sont émis à la facette commune.

8. Appareil de formation d'image comme revendiqué dans la revendication 1 ou 2, dans lequel les rayons laser des dites sources de rayons laser sont réfléchis à une position commune de la facette commune.

9. Appareil de formation d'image comme revendiqué dans la revendication 2, dans lequel ledit moyen d'enregistrement comprend :
un support de transfert intermédiaire sans fin ayant une flexibilité qui est entraîné tout en étant pressé contre les supports d'image (17) le long de la ligne oblique arquée, et
un conduit de traitement de feuille pour acheminer un support de réception, et
un moyen de transfert pour transférer une image de toner du support de transfert intermédiaire au support de réception sur le conduit de traitement de feuille, dans lequel ledit moyen de fixation (40) est situé sur le chemin du conduit de traitement de feuille.

10. Appareil de formation d'image comme revendiqué dans la revendication 2, dans lequel ledit miroir polygonal (21b) est situé à une partie inférieure proche d'un côté et ledit moyen de fixation (40) est situé à une partie supérieure proche de l'autre côté.
